# EUROPEAN PATENT APPLICATION

(11) **EP 2 641 871 A2**
(43) Date of publication of application: **25.09.2013**
(21) Application number: 12275079.7
(22) Date of filing: 29.05.2012
(51) Int. Cl.: C02F 1/00, A47L 11/00

(54) **Stand-alone water recycling unit**

(30) Priority: 21.03.2012 GB 201204961
(71) Applicant: Innovative Industries Limited, Manchester Lancashire M44 5PN (GB)
(72) Inventor: Crompton, Dean William, Cobham, Surrey KT11 2NJ (GB)
(74) Representative: Brooke-Jones, Helen

(57) **Abstract**

A water re-fill unit for use with a reservoir of water, comprising: a water tank; a water inlet on said tank; and a water outlet on said tank for connection to said reservoir of water, wherein the water inlet is adapted to receive water from the reservoir of water and wherein the unit comprises a stand-alone system adapted to recycle at least 50% of the water intake from said reservoir of water using at least one water filtration means. Also provided is an adaptor for connection to a water conductor, the adaptor being suitable for location in a water reservoir to facilitate water intake therefrom, wherein the adaptor is heavy to facilitate sinking to a bed of the water reservoir and comprises a filtration member through which water intake is effected and a connector for attachment to the water conductor.

## Description

### BACKGROUND

### Technical Field

The present invention relates generally to the field of stand-alone water recycling units. More particularly, but not exclusively, the present invention concerns a stand-alone water recycling unit for use with floor cleaning machines.

### Description of the Related Art

Mobile cleaning machines are used for contract or commercial cleaning of large floor areas, such as walls, ground or floor surfaces particularly in external environments.

Mobile floor cleaning machines typically use a lot of water, which is expensive to re-/fill and time inefficient. Recent developments in mobile floor cleaning machines employs a novel on-board water recycling system, which reduces the water used by sucking the water back into the machine, filtering the water and re-using the water.

Unfortunately, not all mobile floor cleaning machines have the capacity to filter water that is sucked back up to a minimum required standard, either for use again, or for safe disposal down a public drain. Therefore, they need to re-fill.

Furthermore, with machines having a novel on-board water recycling system, there is still a limit to the number of times that a tank of water can be filtered through the machine before it becomes too dirty to use.

Existing technology includes re-fill stations for such machines, where a mobile floor cleaning machine can empty out the used water and re-fill with clean 'mains' water. However, such stations require a mains supply and often a powered pump, which is only convenient for installation in some locations, making use of a mobile floor cleaning machine on many outdoor areas, such as pavements, inconvenient and difficult to re-fill. This in turn results in a lot of "downtime" for a mobile floor cleaning machine, which is time inefficient.

Re-filling a floor cleaning machine with mains water is costly and has a significant environmental impact. With the most efficient cleaning machines, one litre of water can clean an area the size of 60m²/l. For a typical retail store, with an exposed floor area of 7000m², uses 117 litres of water at 60m²/l per clean. With a daily clean of the exposed floor space, it is believed that a conservative estimate of annual water usage would therefore be 42,705 litres of water.

With an efficient water recycling floor cleaner, up to 90% of this water can be saved (38000 litres), but this does not present a solution for non-water recycling floor cleaning machines.

Therefore, it is an object of the present invention to address one or more of the problems of the prior art as discussed herein or otherwise.

### SUMMARY OF THE INVENTION

In a first aspect of the present invention there is provided a water re-fill unit for use with a reservoir of water, comprising: a water tank; a water inlet on said tank; and a water outlet on said tank for connection to said reservoir of water, wherein the water inlet is adapted to receive water from the reservoir of water and wherein the unit comprises a stand-alone system adapted to recycle at least 50% of the water intake from said reservoir of water using at least one water filtration means.

The reservoir of water may be any suitable containment of water, for example, a water tank from any cleaning machine including a floor cleaning machine, a paddling pool, a small swimming pool, a water storage tank, etc.

In a second aspect of the present invention there is provided a water re-fill unit for use with cleaning machines, comprising: a water tank; a water inlet on said tank; and a water outlet on said tank for connection to a cleaning machine, wherein the water inlet is adapted to receive water from a cleaning machine and wherein the unit comprises a stand-alone system adapted to recycle at least 50% of the water intake from said cleaning machine using at least one water filtration means.

With this arrangement, at least a proportion of a full tank of dirty water from a cleaning machine can be emptied, recycled and re-piped back into the cleaning machine using an external stand-alone unit, instead of the cleaning machine requiring an on-board filtration system or re-filling the cleaning machine using 100% 'fresh' water.

By 'fresh' water, what is meant is water from a mains water supply, or collected and filtered rain water.

By 'stand-alone system', what is meant is a system has no dependencies or requirement for a professional service on installation, such as a wired connection to an electrical junction box electrical connection or fixed plumbing.

By 'cleaning machine' what is meant is any mobile and/or ride-on cleaning machine that uses water to clean and carries said water supply on-board, for example a floor cleaning machine, such as the Surfacemaster ® by Innovative Industries Ltd.

Preferably, the system is adapted to recycle at least 60% of the water intake from said cleaning machine. Preferably still, the system is adapted to recycle at least 70% of the water intake from said cleaning machine. More preferably, the system is adapted to recycle at least 80% of the water intake from said cleaning machine. Most preferably, the system is adapted to recycle at least 90% of the water intake from said cleaning machine.

Preferably, the unit comprises an auxiliary water inlet for introducing 'fresh' water into the system. Preferably, the auxiliary water inlet is provided in the water tank. Preferably, the auxiliary water inlet is adapted to be temporarily connected to a 'fresh' water source. Preferably, said temporary connection requires no professional plumbing installation. Preferably, said temporary connection comprises a hose pipe to a water supply, for example, a tap on a sink, or an outside tap, or a tap on a water butt.

Preferably, the unit comprises a water gun to facilitate cleaning of the inside of the water tank. The water gun may use the temporary connection to the auxiliary water inlet. Therefore, the temporary connection to the auxiliary water inlet may detach from the water inlet and attach to a water gun.

The connection between the auxiliary water inlet and/ or the water gun may be a non-return valve.

With the above arrangement, the unit can be installed in a location without requiring any plumbing. This makes the unit simple and easy to install and de-limits the number and types of locations that the unit can be placed in.

Accordingly, the unit may be adapted to take in up to approximately 50% 'fresh' water in a single cycle. Preferably, the unit is adapted to take in up to approximately 40% 'fresh' water in a single cycle. More preferably, the unit is adapted to take in up to approximately 30% 'fresh' water in a single cycle. Further preferably, the unit is adapted to take in up to approximately 20% 'fresh' water in a single cycle. Most preferably, the unit is adapted to take in up to approximately 10% 'fresh' water in a single cycle.

By 'single cycle' what is meant is one complete execution of the steps of: water input from a cleaning machine, filtered/ re-cycled through the unit and returned to a cleaning machine.

With this arrangement, the unit facilitates a large reduction of the amount of 'fresh' or even mains water being drawn for the purpose of floor cleaning. The unit therefore, draws fresh water in order to refresh the filtered/ recycled without allowing the water to become too dirty. This provides a good cost saving.

Preferably, the auxiliary water inlet comprises a float valve located inside the tank to control opening, closing of the auxiliary inlet. Preferably, the float valve controls a fresh water top-up of the tank through said auxiliary inlet. Preferably, the float valve operates to close the auxiliary inlet to allow the tank to be filled from the cleaning machine, before opening the auxiliary inlet to perform the top-up. Preferably, the float valve closes the auxiliary inlet once the tank reaches an optimal capacity.

Therefore, preferably, the system is adapted to re-fresh a full tank of water from said cleaning machine in 2-3 cycles using said unit. Preferably still, the system is adapted to re-fresh a full tank of water from said cleaning machine in 4-5 cycles using said unit. More preferably, the system is adapted to re-fresh a full tank of water from said cleaning machine in 6-7 cycles using said unit. Even more preferably, the system is adapted to re-fresh a full tank of water from said cleaning machine in 8-10 cycles using said unit. Most preferably, the system is adapted to re-fresh a full tank of water from said cleaning machine in more than 10 cycles using said unit.

By 're-fresh', we mean that the water that is being placed back into the cleaning machine has been completely replaced by 'fresh' water over the course of the designated number of recycles of the water through the unit.

With this arrangement, the recycling system keeps water costs to a minimum, whilst ensuring that the water is safe and clean enough for use in a cleaning machine.

Preferably, the stand-alone system comprises a water intake apparatus, a water re-fill apparatus and a water recycle apparatus.

Preferably, the water recycle apparatus comprises said water tank and at least said one filtration means. The water recycle apparatus may further comprise a means for introducing a filtration aid to the water tank. The filtration aid may comprise bio-digesters such as enzymes and bacteria. The filtration aid preferably operates to prevent odour and improve recycled water quality.

The water intake apparatus may comprise the water inlet and a water conductor for location between the inlet and a cleaning machine water outlet. The conductor preferably comprises a hose. The hose may comprise one or a variety of interchangeable adaptors for connection to said cleaning machine water outlet. Preferably, the adaptor comprises a non-return valve.

Most preferably, therefore, the water intake apparatus comprises the water inlet and a water conductor for location between the inlet and a cleaning machine water tank. Again, the conductor preferably comprises a hose. Preferably, the hose comprises an adaptor for dropping into the water tank of the cleaning machine for intake of water into the hose. Preferably, the adaptor is removably attached to the hose. Preferably, the adaptor is heavy to facilitate sinking to the bottom of the water tank. Preferably, the adaptor comprises a filtration member through which water intake is effected. Preferably, the adaptor comprises a connector for attachment to the hose.

Preferably, the adaptor comprises a base. The base may be between approximately 15mm and 50mm deep, preferably, between approximately 20mm and 45mm deep. Preferably, the base is flat-bottomed and is preferably hollow.

Preferably, the filtration member extends from an upper face of the base. Most preferably, the filtration member comprises a hollow member extending upwardly from the upper face of the base as part of the upper face, such that the hollow of the filtration member and the base are connected. Preferably, the filtration member allows for water intake there through. Preferably, the apertures are between approximately 5mm and 12mm wide at the widest part, more preferably, between approximately 6mm and 10mm wide at the widest part, most preferably approximately 8mm wide at the widest part. Preferably, the filtration member comprises a blunted cone-shape. Preferably, the apertures comprise longitudinal holes extending from a base of the cone to a top of the cone. Preferably, the apertures narrow towards the top of the cone.

Preferably, the connector comprises a hollow open-ended conduit for connection to the hose. Preferably, the hollow of the connector communicates with the hollow of the filtration member. Preferably, the connector extends from the top of the filtration member.

Preferably, the connector, filtration member and the base are integrally formed. Preferably, the adaptor comprises a non-return valve.

Preferably, the adaptor comprises a primary filtration means. The primary filtration means may comprise a filter. Additionally, or alternatively, the adaptor may comprise a U-bend therein.

Preferably, the water re-fill apparatus comprises the water outlet and a controllable outlet valve.

Preferably, the unit comprises a fast water-recycle mechanism. With this arrangement, time inefficiencies can be minimised by reducing the amount of "downtime" of a mobile floor cleaning machine.

Preferably therefore, the water recycle apparatus is arranged to operate under gravitational force. What is meant by this is that the apparatus involved is arranged to effect natural movement downwards through the apparatus, without requiring any artificial means for moving the water, such as a pump.

Preferably, the unit comprises a fast water re-fill mechanism. With this arrangement, time inefficiencies can be minimised by reducing the amount of "downtime" of a mobile floor cleaning machine.

Preferably therefore, the water re-fill apparatus is arranged to operate under gravitational force.

Preferably, both the water recycle apparatus and the water re-fill apparatus are arranged relative to one another to operate under gravitational force.

More preferably, the stand-alone system has no requirement for an electrical plug connection to a plug point.

Most preferably, the stand-alone system is powered by a DC battery on-board a cleaning machine being filled/ re-filled. Preferably, the stand-alone system is connected to the DC battery of the cleaning machine by a cooperative connector on the unit.

Alternatively, the stand-alone system is powered by a DC battery on-board the unit itself. In this case, the DC battery may be rechargeable, by either a connection to a recharger or connection to a DC power supply on board the cleaning machine.

It will be appreciated that references to a cleaning machine may also be interpreted as any other powered device carrying a reservoir of water for cleaning.

With the above power arrangement, the unit can be installed in a location where no power supply is present or convenient and no electrical wiring is required in the install. This makes the unit simple and easy to install, de-limits the numbers and type of locations that the unit can be placed in and removes the requirement for electricity safety testing.

Preferably, the water intake apparatus comprises a water conductor aid. Preferably, the water conductor aid comprises a suction/ vacuum device. Preferably, said suction/vacuum device comprises at least one pump. Preferably, the pump comprises a 24 volt diaphragm pump.

Preferably, the pump is operable to connect with and be powered by a DC battery.

Preferably, the pump comprises a connector mechanism. The connector mechanism may comprise a DC connector. Preferably, the DC connector is provided on the end of a lead. Preferably, the lead is long enough to reach to a DC battery of a cleaning machine.

Preferably, the pump is operated by an on/ off switch on said pump. Preferably, the pump comprises a timer, so as to automatically switch off after a period of time. The timer may be set to 25 minutes, 20 minutes, 15 minutes, 10 minutes or 5 minutes.

Preferably, the pump is located in operable connection with said conductor close to the water inlet. Preferably, the water inlet is located in a top wall of the water tank of the water recycle apparatus. Preferably, the water intake apparatus feeds water into the water recycle apparatus (tank) under gravitational forces.

Preferably, the first filtration means is located in said tank, but may be disposed externally of said water tank.

The first filtration means may comprise filtration out of particles with a size greater than approximately 1000 µm. Preferably, the first filtration means comprises filtration out of particles with a size greater than approximately 500 µm. More preferably, the first filtration means comprises filtration out of particles with a size greater than approximately 250 µm. More preferably, the first filtration means comprises filtration out of particles with a size greater than approximately 100 µm.

The first filtration means comprises a filter basket and a filter bag. The filter bag is preferably disposed inside the filter basket.

The water inlet may feed water directly into the first filtration means. The water may therefore, enter the tank through said first filtration means.

Preferably however, the first filtration means is suspended within the water tank. Most preferably, the first filtration means is suspended so as to be disposed below the top wall of the water tank and therefore, below the water inlet. With this arrangement, should the first filtration means become partially/ blocked, the water tank will not overflow, as instead, the water will simply flow into the water tank down the sides of the first filtration means.

The filter basket may be suspended via arms extending from inner walls of said tank. Preferably, the filter basket is suspended via one or more horizontal arms extending from inner side walls of the tank. Most preferably, the filter basket is suspended via three horizontal arms extending from inner side walls of the tank.

Preferably, the water recycle apparatus comprises a second filtration means. Preferably, the second filtration means comprises filtration out of particles with a size less than the first filtration means. The second filtration means may comprise filtration out of particles with a size greater than approximately 500 µm. Preferably, the second filtration means comprises filtration out of particles with a size greater than approximately 250 µm. More preferably, the second filtration means comprises filtration out of particles with a size greater than approximately 100 µm. More preferably, the second filtration means comprises filtration out of particles with a size greater than approximately 50 µm. Most preferably, the first filtration means comprises filtration out of particles with a size greater than approximately 25 µm.

Preferably, the second filtration means is located below the first filtration means. Preferably, the second filtration means is located outside the water tank. Prefer ably the second filtration means is located below the tank. Preferably, the second filtration means is located on an outlet pipe from said tank.

Preferably, the water re-fill apparatus comprises an outlet pipe. Preferably, the second filtration means is located above said outlet valve on said outlet pipe. Preferably, said outlet valve is a manual ball valve.

Preferably, the water outlet of the water re-fill apparatus is adapted to connect to a hose for attachment to a water inlet of a cleaning machine.

Preferably, the unit comprises a frame. Preferably, the frame is adapted for attachment to a wall, support structure or floor. The frame may alternatively be provided with wheels thereon, such as castors, for mobility.

The frame preferably comprises mountings for the water tank, the water re-fill apparatus and the water intake apparatus. Preferably the frame comprises a water tank elevation shelf. Preferably, the frame comprises a housing for the water conductor of the intake apparatus. Preferably, the frame comprises a supporting bracket for the water re-fill apparatus.

The unit may filter water from a cleaning machine at a rate of up to approximately 10 Itrs/min. Preferably, the unit filters water from a cleaning machine at a rate of up to approximately 20 Itrs/min. More preferably, the unit filters water from a cleaning machine at a greater rate than 20 litres/min. This will depend upon the capacity of the pump installed.

The unit may empty a cleaning machine of dirty water at a rate of up to approximately 10 litres/min. Preferably, the unit empties a cleaning machine of dirty water at a rate of up to approximately 20 litres/min. More preferably, the unit empties a cleaning machine of dirty water at a greater rate than 20 litres/min. Again, this will depend upon the capacity of the pump installed.

Preferably, the unit re-fills a cleaning machine at a rate of up to approximately 500 litres/min. More preferably, the unit re-fills a cleaning machine at a rate of up to approximately 3000 litres/min (for example, a 500 litre tank in 10 seconds).

The tank may have a capacity of between approximately 15 litres and approximately 500 litres. Preferably, the unit is available in the following capacities: 15 litres, 50 litres, 100 litres, 250 litres and 500 litres.

Preferably, at least a bottom portion of the frame is closed with panels. The panels may be removably attached to allow access therein.

The frame may comprise attachments or housings for holding other cleaning utensils thereon.

In a third aspect of the invention there is provided an adaptor for connection to a water conductor, the adaptor being suitable for location in a water reservoir to facilitate water intake therefrom, wherein the adaptor is heavy to facilitate sinking to a bed of the water reservoir and comprises a filtration member through which water intake is effected and a connector for attachment to the water conductor.

Preferably, the adaptor is removably attachable to the water conductor. The conductor may comprise a hose. Preferably, the adaptor comprises a non-return valve.

Preferably, the adaptor comprises a base. The base may be between approximately 15mm and 50mm deep, preferably, between approximately 20mm and 45mm deep. Preferably, the base is flat-bottomed and is preferably hollow.

Preferably, the filtration member extends from an upper face of the base. Most preferably, the filtration member comprises a hollow member extending upwardly from the upper face of the base as part of the upper face, such that the hollow of the filtration member and the base are connected. Preferably, the filtration member allows for water intake there through. Preferably, the apertures are between approximately 5mm and 12mm wide at the widest part, more preferably, between approximately 6mm and 10mm wide at the widest part, most preferably approximately 8mm wide at the widest part. Preferably, the filtration member comprises a blunted cone-shape. Preferably, the apertures comprise longitudinal holes extending from a base of the cone to a top of the cone. Preferably, the apertures narrow towards the top of the cone.

Preferably, the connector comprises a hollow open-ended conduit for connection to the water conductor. Preferably, the hollow of the connector communicates with the hollow of the filtration member. Preferably, the connector extends from the top of the filtration member.

Preferably, the connector, filtration member and the base are integrally formed.

It is to be appreciated that the adaptor of the third aspect may be used with the unit of the first and second aspects, but may also be used with other apparatus where a water conductor is being used to empty a water reservoir.

### BRIEF DESCRIPTION OF THE DRAWINGS

For a better understanding of the invention, and to show how exemplary embodiments may be carried into effect, reference will now be made to the accompanying drawings in which:
- Figure 1: is a perspective view of an exemplary embodiment of a water re-fill unit according to the invention; and
- Figure 2: is a perspective view of an exemplary embodiment of an adaptor for use with the water re-fill unit of figure 2.

### DETAILED DESCRIPTION OF THE EXEMPLARY EMBODIMENTS

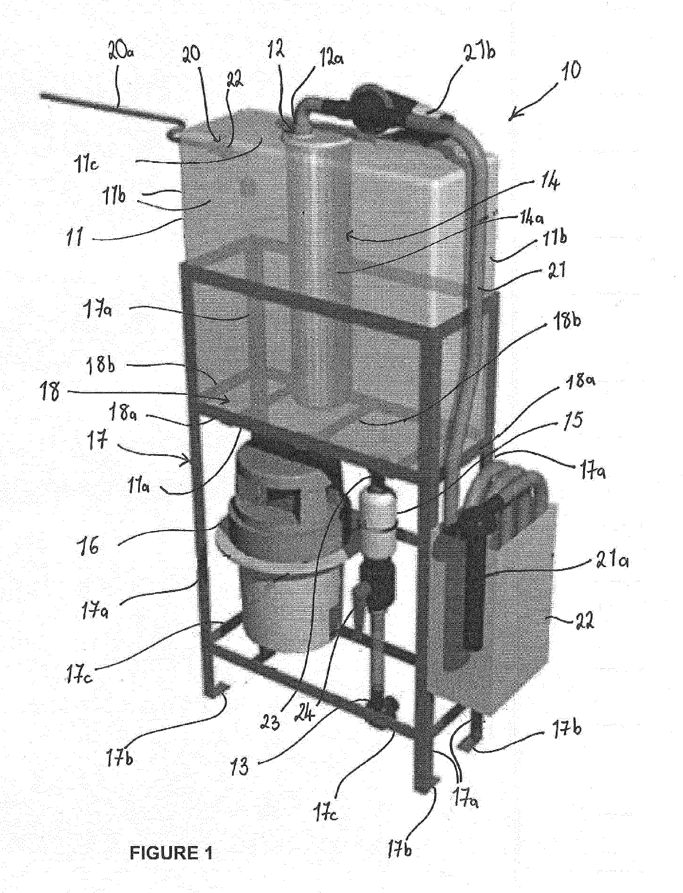

Figure 1 is a perspective view of a water recycling unit according to an exemplary embodiment.

As shown in Figure 1, the water re-fill unit (10) comprises a water tank (11), a water inlet (12) and a water outlet (13) on said tank for connection to a reservoir of water. The water inlet (12) is adapted to receive water from a reservoir of water. The unit (10) is a stand-alone unit adapted to recycle at least 50% of the water intake from said reservoir of water using at least one water filtration means (14, 15).

For the purpose of describing the invention in detail, the unit (10) will be described by reference to use with a cleaning machine, although it will be appreciated that the invention could be used with other powered devices, or un-powered apparatus with a reservoir of water, for example, a water tank from any cleaning machine including a floor cleaning machine, a paddling pool, a small swimming pool, a water storage tank, etc.

The tank (11) is generally rectangular in shape with a base (11a), four side walls (11b) and a top wall (11c). The top wall (11c) of the tank comprises the water inlet (12), whilst the base (11a) comprises a second water outlet (23) which leads to said water outlet (13) for connection to a clean water tank of a cleaning machine. The tank (11) further comprises an auxiliary water inlet (20) for connection to an external water supply. An example volume of the tank (11) is 500 litres.

The unit (10) comprises frame (17), which is either free-standing or can be affixed to a wall or other stable structure, such as a floor. The frame (17) comprises a substantially rectangular frame of tubular metal and comprises four legs (17a), with feet (17b) thereon for stability. The feet (17b) are generally turned inwardly of the frame (17), so as to sit under the frame (17) in order to avoid health and safety problems for passers-by. Since the frame (17) is load-bearing in that it needs to be able to bear the weight of the water tank (11), the frame (17) is provided with stabilising horizontal bars (17c) between adjacent legs (17a) in a lower region thereof.

The frame (17) further provides a shelf (18) to receive the water tank (11). The shelf (18) is provided in an elevated position relative to a ground surface and provides four horizontal angle (L-shaped) bars (18a), which extend between adjacent legs (17a) in an upper region thereof. The angle-bars (18a) each face inwardly to receive bottom edges of the tank (11). The shelf (18) further provides a plurality of support bars (18b), which extend between opposite horizontal bars (18a) upon which the base (11a) of the tank (11) sits. Upwardly of the shelf (18) and at, or close to a top end of the legs (17a), the frame (17) comprises an upper support structure (19). The support structure (19) comprises four horizontal bars (19a), which extend between adjacent legs (17a). The support structure (19) supports the side walls (11b) of the tank (11), to maximise stability.

The water inlet (12) comprises a connection (12a) to a pipe (21), which is adapted to connect to a water outlet of a cleaning machine (not shown). The pipe (21) is long to allow it to reach to a cleaning machine parked close by and a significant length of the pipe (21) is stored (coiled into) in a housing (22) appended to one side of the frame (17) for convenience. The pipe (21) therefore comprises one or a series of suitable adaptors (21a) for a water tight connection with a cleaning machine. The adaptors (21a) comprise a filter therein. One adaptor (not shown) comprises a U-bend to facilitate immediate settling out of large solids, which minimises the blocking of the filtration means.

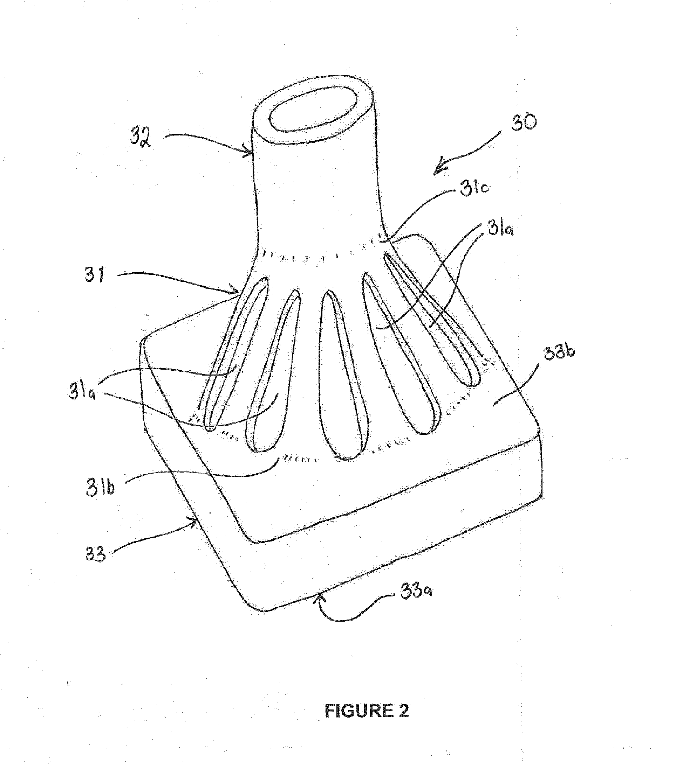

A further adaptor (30) for attachment to the pipe (21) of the current adaptor (21a) of the unit (10) is shown in Figure 2. The adaptor (30) for connection to a water conductor, such as a pipe (21) is suitable for location in a water reservoir, such as a water tank of a cleaning machine, to facilitate water intake therefrom. The adaptor (30) is heavy to facilitate sinking to a bed of the water tank/ reservoir and comprises a filtration member (31) through which water intake is effected and a connector (32) for attachment to the water conductor.

The adaptor (30) is removably attachable to the pipe (21) or the adaptor (21a) via the connector (32).

The adaptor further (33) comprises a base which is flat-bottomed (33a) and hollow. The base (33) is approximately 20mm deep. The base (33) sits on the bed of a water tank or reservoir that is to be emptied of water. The depth of the base minimises the possibility of the filtration member (31) from being blocked with already settled sediment on the base of the tank/ reservoir.

The filtration member (31) comprises a hollow cone-shaped member that extends from an upper face (33b) of the base (33). The hollow of the filtration member (31) and the base (33) are connected. The filtration device comprises longitudinal apertures (31a) for water intake there through. The apertures (31a) extend from near a base (31b) of the cone to near a top (31c) of the cone and they narrow towards the top of the cone (31c). The apertures (31a) are approximately 8mm wide at the widest part to prevent large particles from being drawn there through.

The connector (32) comprises a hollow open-ended conduit for connection to the pipe (21) or the adaptor (21a). The hollow of the connector (32) communicates with the hollow of the filtration member (31) and extends from the top (31c) of the filtration member (31).

The connector (32), filtration member (31) and the base (33) are integrally formed from metal with a rust-prevention coating, which is preferably, a water ingress-resistant plastics coating.

In use, the pipe (21) or the adaptor (21a) is connected to the connector (32) and the adaptor (30) is then dropped into a water tank reservoir. Due to the weight of the adaptor (30), it sinks to the bottom of the tank/ reservoir with the pipe (21) attached. Due to the configuration of the adaptor (30), the flat bottom of the base (33) rests on the bed of the tank/reservoir, with the filtration member (31) standing substantially upright in the tank/ reservoir. Once the suction mechanism is employed, the water in the tank/reservoir is drawn through the apertures (31a) into the filtration member (31) and up through the connector (32) into the pipe (21) to the unit 910). The hollow base (33) collects any heavy sediment that passes through the apertures (31a). Once the water level in the tank/ reservoir falls below the level of the apertures (31a), water collection ceases. This means that due to the depth of the base (33), the sediment already on the bed of the tank/ reservoir is generally not drawn in though the apertures (31a) unless the sediment is agitated.

This adaptor (30) is utilised as a primary/ crude filtration means and a means for effectively emptying a tank/ reservoir of water.

The adaptor (30) may be used with the unit (10), but may also be used with other apparatus where a water conductor is being used to empty a water reservoir.

The pipe (21) also comprises a water extraction means in the form of a diaphragm pump (21b) for increasing the efficiency with which the water can be sucked out of the cleaning machine and up to the top (11c) of the tank (11). The pump (21b) is powered through connection with the DC battery (not shown) on-board the cleaning machine by connection of an electrical lead with a DC connector to the DC battery.

The auxiliary water inlet (20) provides a means for re-freshing the water in the tank (11) during recycling of the extracted machine water. The inlet provides a simple connection to a hose (20a), which can be easily attached to a tap on a sink, or an outside tap, or even a tap on a water butt. The auxiliary inlet (20) is attached to a float valve (22) located inside the tank, such as a Torbeck® float valve by Opella Limited, which delays the opening of the valve so allowing the tank (11) to be filled through the inlet (12) before the tank is topped-up by the required amount and closes the valve once the tank is deemed full.

The water inlet (12) feeds directly into the top of a first filtration means (14). The first filtration means (14) comprises a filter basket (perforated) which extends internally from the top (11c) towards the base (11b) of the tank (11), although in exemplary embodiments, the basket is suspended from the top of the tank (11). The filter basket carries a 250 µm filter therein. Water passing into the first filtration means (14) from the water inlet (12) is filtered of all particles that are of a size of 250 µm or more, by passing out of the filter via a perforated side wall (14a) thereof.

The unit (10) further comprises bio-digester (16), which is connected to the water tank (11) independently. An example is Hydro Engineering's Hydro-Biodigesters (HBD). The bio-digester is operable to automatically dose the tank (11) with bio-digesters on a daily basis. The bio-digesters comprise a variety of bacteria and enzymes that prevent odour, facilitate filtration by digesting unwanted particles and therefore, improving the quality of the water exiting the tank (11) at the second water outlet (23).

The bio-digester may be supplemented with a cleaning aid.

The second water outlet (23) exits the base (11a) of the tank (11) at a location offset from that of the first filtration means (14). The outlet (23) is connected to a second filtration means (15) located outside the tank (11). The second filtration means (15) is a 100 µm filter. Water passing into the second filtration means (14) directly from the water tank (11) is further filtered of all particles that are of a size of 100 µm or more, by passing through the filter on its way to a control valve (24), such as a suitable ball valve, for controlling water flow out of the water outlet (13), once connected to a water inlet of a cleaning machine.

The unit (10) is installed by simply placing it in a convenient location, within hose-distance of a water supply. The unit is most conveniently located on a wall and can be wall mounted for safety and ease. No plumbing or electrical connections are required for installation.

In use, a hose (20a) is connected to a water supply and the valve (24) can be in a 'closed' position. A cleaning machine with a reservoir of dirty water is connected to the unit (10) by removing the pipe (21) from the housing (22) and connecting the pipe adaptor (21a) to a water outlet of a waste tank of the cleaning machine, or dropping the adaptor (30) into the waste water tank.. The pump (21b) is attached to the DC battery of the cleaning machine and turned on. The pump (21b) operates to suck the dirty water from the cleaning machine store up through the pipe (21) and into the first filter (14) via the inlet (12). The water passes through the first filter (14) and into the tank (11). A small proportion of the water passes out of the tank (11) through the second outlet (23) and the second filter (15) to the valve (24), but no further until the valve is turned to the 'open' position. Once the cleaning machine is empty, the pipe (21) can be detached. At this stage, the float valve (22) located at the auxiliary water inlet (20) fills the tank (11) with clean water from another source, up to a required level. The water in the tank (11) should be filtered to at least a 250 µm level. The second stage of filtration occurs as the water passed through the second filter (15) on its way to the exit valve (24) and the outlet (13). Accordingly, the 'fresh' water and the recycled water passes through the second stage of filtration. The outlet (13) is attached to a water inlet of the cleaning machine (which may be the same as the water outlet) and the valve is turned to the 'open' position. Under the action of gravity, the water from the tank (11) automatically drains through the second outlet (23), through the second filter (15), through the valve (24) and the outlet (13) and into the cleaning machine.

Of course, if a cleaning machine has both a waste water tank and a clean water tank, with their own inlet/outlet, then the filling, filtration and re-fill can occur simultaneously.

The water entering the cleaning machine is in most cases comprised of least 50% recycled water and 'fresh' water which has all been filtered to a 50 µm standard. However, in some instances, up to approximately 95% of recycled water makes up the water entering the cleaning machine.

The suction-assisted emptying mechanism and the gravity operated recycling and re-filling system allows a machine to be ready to operate again in a matter of minutes. For example, with a 20litre/min capacity pump, a 500 litre waste water tank can be emptied in approximately 25 minutes: with filtration and re-fill occurring simultaneously at the rate at which the water is fed into the machine under the gravity feed system, the machine can be ready to operate again in approximately 25 minutes. In a further example, with a 20litre/min capacity pump, a 250 litre waste water tank can be emptied in approximately 12.5 minutes: with filtration and re-fill occurring simultaneously at the rate at which the water is fed into the machine under the gravity feed system, the machine can be ready to operate again in approximately 12.5 minutes.

The recycling system keeps water costs to a minimum, whilst ensuring that the water is safe and clean enough for use in a cleaning machine. In addition, with a top-up intake of 'fresh' water, this ensures that there is gradual 're-freshing' of the water being used in a single cleaning machine over the course of a number of cycles. For example, where 95% of water is recycled each time, twenty cycles would completely re-fresh the water, where 90% of water is recycled each time, ten cycles would completely re-fresh the water, and where 50% of water is recycled each time, two cycles would completely re-fresh the water. The efficiency of the recycle yield will depend greatly on whether the cleaning machine has its own on-board water filtration system and how effective that system is.

Although a preferred embodiment has been shown and described, it will be appreciated by those skilled in the art that various changes and modifications might be made without departing from the scope of the invention.

## Claims

1. A water re-fill unit for use with a reservoir of water, comprising: a water tank; a water inlet on said tank; and a water outlet on said tank for connection to said reservoir of water, wherein the water inlet is adapted to receive water from the reservoir of water and wherein the unit comprises a stand-alone system adapted to recycle at least 50% of the water intake from said reservoir of water using at least one water filtration means.

2. The water re-fill unit according to claim 1, wherein stand-alone system is powered by a DC battery on-board a machine being filled/ re-filled.

3. The water re-fill unit according to claim 1 , wherein the stand-alone system is powered by a rechargeable DC battery on-board the unit itself.

4. The water re-fill unit according to any one of claims 1 to 3, wherein the system is adapted to recycle at least 60% of the water intake from said reservoir.

5. The water re-fill unit according to any one of claims 1 to 4, wherein the unit comprises an auxiliary water inlet for introducing 'fresh' water into the system.

6. The water re-fill unit according to any one of claims 1 to 5, wherein the stand-alone system comprises a water intake apparatus, a water re-fill apparatus and a water recycle apparatus.

7. The water re-fill unit according to claim 6, wherein the water recycle apparatus comprises said water tank and at least said one filtration means.

8. The water re-fill unit according to any one of claims 6 or 7, wherein the water intake apparatus comprises the water inlet and a water conductor for location between the inlet and a cleaning machine water tank.

9. The water re-fill unit according to claim 8, wherein the water conductor comprises an adaptor for dropping into the water tank of the cleaning machine for intake of water into the conductor.

10. The water re-fill unit according to claim 9, wherein the adaptor comprises a primary filtration means.

11. The water re-fill unit according to any one of claims 6 to 10, wherein the water re-fill apparatus comprises the water outlet and a controllable outlet valve.

12. The water re-fill unit according to any one of claims 6 to 11, wherein the water recycle apparatus is arranged to operate under gravitational force.

13. The water re-fill unit according to any one of claims 6 to 12, wherein the water recycle apparatus comprises a second filtration means.

14. The water re-fill unit according to any one of claims 1 to 13, wherein the unit empties a cleaning machine of dirty water at a rate of up to approximately 10 litres/min.

15. An adaptor for connection to a water conductor, the adaptor being suitable for location in a water reservoir to facilitate water intake therefrom, wherein the adaptor is heavy to facilitate sinking to a bed of the water reservoir and comprises a filtration member through which water intake is effected and a connector for attachment to the water conductor.
